# EUROPÄISCHE PATENTSCHRIFT

(11) **EP 0 426 654 B1**
(45) Veröffentlichungstag und Bekanntmachung des Hinweises auf die Patenterteilung: **02.03.1994**
(21) Anmeldenummer: 91100569.2
(22) Anmeldetag: 26.09.1989
(51) Int. Cl.: G11B 15/68

(54) **Vollautomatisch arbeitendes Bandbedienungsarchiv**
Fully automatic tape archive system
Archivage de bandes à fonctionnement automatique

(30) Priorität: 29.09.1988 DE 3832994; 03.06.1989 DE 3918198
(43) Veröffentlichungstag der Anmeldung: 08.05.1991
(62) Teilanmeldung aus: 89117715.6
(73) Patentinhaber: GRAU GMBH & CO., D-73527 Schwäbisch Gmünd (DE)
(72) Erfinder: Baur, Rolf, verstorben (DE)
(74) Vertreter: Hoeger, Stellrecht & Partner

(56) Entgegenhaltungen:
- EP-A- 0 162 248
- DE-A- 3 621 790
- DE-A- 3 730 021
- FR-A- 2 115 764
- FR-A- 2 610 755
- US-A- 4 271 440
- US-A- 4 742 405
- US-A- 4 754 445
- IBM TECHNICAL DISCLOSURE BULLETIN vol. 16, no. 5, Oktober 1973, NEW YORK, US Seiten 1584 - 1585; R. L. SCHAAF: "CARTRIDGE HANDLING SYSTEMS"
- MODERN MATERIALS HANDLING. 19 November 1982, DENVER US Seiten 48 - 51; "A NEW LEVEL OF AUTOMATION"

## Beschreibung

Die Erfindung betrifft ein vollautomatisch arbeitendes Bandbedienungsarchiv mit einem Kassettenfächer für Bandkassetten aufweisenden Speicher, mit mindestens einer Bandeinheit zum Lesen und Beschreiben der Bandkassetten und mit mindestens einem Roboter zum Transportieren der Bandkassetten zwischen Speicher und Bandeinheit.

Aus der DE-PS 25 19 870 ist ein vollautomatisch arbeitendes Bandbedienungsarchiv bekannt, bei welchem eine Greifeinrichtung zwischen zwei beiderseits einer Verschiebebahn der Greifeinrichtung angeordneten Kassettenspeichern verfahrbar ist. Außerdem sind jeweils hinter den Kassettenspeichern, das heißt auf der der Verschiebebahn gegenüberliegenden Seite Bandeinheiten zum Abspielen der Bänder angeordnet. Der Greifer kann nun die Bandkassetten aus dem Speicher herausnehmen und zu der jeweiligen Bandeinheit transportieren, wobei eine Durchreichevorrichtung vorgesehen ist, mit welcher die Bandkassette durch den Speicher hindurch zu der auf der Rückseite des Speichers angeordneten Bandeinheit transportierbar ist, in welcher ein beabsichtigter Schreib- und Lesevorgang erfolgt.

Aus der DE-OS 36 21 790 ist ebenfalls ein vollautomatisch arbeitendes Bandbedienungsarchiv bekannt, bei welchem ein Speicher mit auf einem Kreisbogen angeordneten Regaleinheiten vorgesehen ist. Im Zentrum des Kreisbogens ist eine erste Greifeinrichtung vorgesehen, welche in der Lage ist, Bandkassetten aus den Regaleinheiten zu entnehmen oder in diese einzusetzen. Diese Greifeinrichtung gibt dann die Bandkassetten durch eine Lücke zwischen den Regaleinheiten zu einer zweiten Greifeinrichtung, die dann ihrerseits in der Lage ist, die Bandkassetten zu einem bestimmten Schreib- oder Lesevorgang in eine der Bandeinheiten zum Abspielen derselben einzusetzen oder aus diesen zu entnehmen. Die zweite Greifeinrichtung ist dabei zentral zwischen insgesamt vier Speichern mit auf einem Kreisbogen angeordneten Regaleinheiten positioniert, wobei jede Regaleinheit die zentral angeordnete erste Greifeinrichtung aufweist.

Bei diesen bekannten Bandbedienungsarchiven besteht das Problem, daß eine Greifeinrichtung nur eine bestimmte Zahl von Transferoperationen pro Zeiteinheit durchführen kann und daß die Vergrößerung eines derartigen Bandbedienungsarchivs hinsichtlich des zur Verfügung stehenden Speicherplatzes durch die pro Zeiteinheit durch eine Greifeinrichtung transferierbaren Bandkassetten begrenzt ist.

Aus der EP-A-0 288 165 (nachveröffentlicht) ist ein automatisches Kassettenwechselsystem bekannt, bei welchem mehrere Speichereinheiten hintereinander angeordnet sind.

Zum Transport der Kassetten sind zwei Roboter auf denselben Schienen vorgesehen, wobei ein Hauptroboter einen Austausch zwischen einem den Schreib-/Leseeinheiten benachbarten Speicher und den Schreib-/Leseeinheiten vornimmt, während der zweite Roboter einen Transport zwischen zusätzlichen und als Drehtürme ausgebildeten Speichereinheiten und einem Zwischenspeicher vornimmt, wobei von letzterem ausgehend der Hauptroboter den Transport der Kassetten zu den Schreib-/Leseeinheiten vornimmt.

Bei einer derartigen Anordnung mit zwei Robotern auf denselben Schienen besteht das Problem, daß sich die Transportleistung auch durch zwei Roboter nicht in gewünschter Weise erhöhen läßt, da diese sich gegenseitig behindern und stets eine Übergabe vom ersten auf den zweiten Roboter notwendig ist, um die Kassetten letztendlich in die Schreib-/Leseeinheiten einzusetzen.

Aus der Zeitschrift "Modern Materials Handling", 19. November 1982, ist durch den Artikel mit dem Titel "A new level of automation in work-in-process handling" ein lineares Transportsystem für Montagezwecke bekannt. Zweck dieses Transportsystems ist der lineare Weitertransport von Werkstücken in Schachteln oder Kästen über Transportbänder von einer Verarbeitungsstelle zur nächsten. Hierfür sind in eine Richtung wirkende Transportvorrichtungen vorgesehen, wobei mit einer Beladevorrichtung ein Pufferspeicher beladbar ist und mit einer Entladevorrichtung der Pufferspeicher entladbar ist.

Der Pufferspeicher wird somit mit den Schachteln oder Kästen durch die Beladevorrichtung befüllt und durch die Entladevorrichtung entleert.

Die Aufgabe der Vorrichtung gemäß der US-PS 4 271 440 besteht darin, eine möglichst einfache Lösung zu finden, bei welcher über einen Kassettenspeicher mehrere Playback-Maschinen versorgt werden können, wobei ausdrücklich darauf hingewiesen wird, daß das grundlegende Konzept gemäß der US-PS 4 271 440 darin besteht, mit einer Speichertrommel über eine mechanische Transfervorrichtung einen Stapel von typischerweise fünf übereinander angeordneten Playback-Maschinen zu beladen.

Lediglich für Zwecke der Ausfallsicherheit werden zwei Transfervorrichtungen vorgesehen. Dies wird untermauert dadurch, daß eine Ausführungsform lediglich eine Transfervorrichtung umfaßt und als alternative Ausführung der Erfindung "mit geringerer Redundanz" bezeichnet wird.

Es wird in der US-PS 4 271 440 dargelegt, daß der Einsatz der zweiten Transfervorrichtung lediglich dazu dient, den Verschleiß der einen Transfervorrichtung zu reduzieren, wobei im Falle des Ausfalls einer Transfervorrichtung die andere Transfervorrichtung zum Einsatz kommt. Dies heißt aber, daß die beiden Transfervorrichtungen nicht gleichzeitig arbeiten, sondern daß die beiden Transfervorrichtungen nur abwechselnd zum Einsatz kommen.

Damit offenbart die US-PS 4 271 440 nicht den Grundgedanken, daß mit zwei Robotern die Transferleistung und somit auch die Speicherkapazität in einem Bandbedienungsarchiv erhöht werden kann.

Aus dem IBM Technical Disclosure Bulletin Vol. 25, Nr.10, März 1983, Seiten 5506 bis 5507 ist unter dem Titel "Tape Cartridge Library System" eine Speichereinrichtung für Datenspeicherkassetten bekannt, bei welcher übereinander angeordnete Karusselle vorgesehen sind, die einen mittigen Durchbruch aufweisen, so daß sich durch alle Karusselle hindurch ein mittiger Kanal ergibt. In diesem mittigen Kanal sind Greifer bewegbar, die von diesem mittigen Kanal aus auf um diesen Kanal herum in den Karussellen angeordneten Kassetten zugreifen. Ferner sind die Karusselle in Gruppen zusammengefaßt, die beiderseits eines mittigen Bereichs angeordnet sind, in welchem die in dem inneren Kanal bewegbaren Greifer die Möglichkeit haben, Kassetten zu außerhalb der Karusselle angeordneten Leseeinheiten zu transportieren.

Diese Anordnung hat den Nachteil, daß die konstruktive Realisierung derselben Probleme aufwirft, da die Lagerung und Aufstellung derartiger, einen inneren Kanal bildender Karusselle, mit Problemen verbunden ist. Darüberhinaus kann die Speicherkapazität der Gesamtheit der Karusselle nicht in praktikabler Weise beliebig erhöht werden, da die Karusselle vertikal übereinander angeordnet sein müssen und somit beim Einbau in üblichen Räumen bereits eine Begrenzung durch die Raumhöhe gegeben ist.

Darüberhinaus ist in dieser Druckschrift nicht angegeben, wie der gesamte, den Greifer bewegende Roboter angeordnet sein soll. Auch dessen Anordnung im mittleren Kanal ist mit Problemen verbunden.

Schließlich ist dieses System nicht beliebig erweiterbar, da dies eine Änderung der Konzeption für den jeweiligen Roboter erforderlich macht.

Aus dem IBM Technical Disclosure Bulletin Vol. 16, Nr. 5, Oktober 1973, Seiten 1584 bis 1585 ist ein "Cartridge Handling System" bekannt, welches Speicherkarusselle für Datenspeicherkassetten aufweist, wobei mindestens zwei Roboter Zugriff zu jedem Karussell haben. Diese Roboter sind lediglich um eine Drehachse drehbar und ansonsten unbeweglich fixiert.

Darüberhinaus ist jedem Roboter zum Beschreiben und Lesen der Datenspeicherkassetten eine sogenannte "processing unit" zugeordnet, wobei alle "processing units" mit einem Benutzer verbunden sind.

Das offenbarte System arbeitet nicht mit einem gemeinsamen "Speicherpool" für die Bandkassetten. Vielmehr wird eines der Karusselle als sogenannte "closed data base" und das andere Karussell als sogenannte "open data base" verwendet, so daß jeweils zwei Roboter immer nur zu jeweils einem Speicherkarussell Zugriff haben.

Der Nachteil der vorstehend beschriebenen Vorrichtung ist darin zu sehen, daß dadurch, daß die zwei Roboter lediglich auf ein Speicherkarussell zugreifen können, das Speicherkarussell in der Mehrzahl aller Fälle lediglich so positioniert sein kann, daß eine Kassette für einen Roboter in der richtigen Stellung steht, während in der Regel beim Greifen dieser Kassette durch einen Roboter der andere Roboter warten muß bis dieser Vorgang beendet ist und die für ihn erforderliche Kassette durch Drehen des Speicherkarussells in ihre Roboterzugriffsposition gebracht werden kann.

Damit können die beiden Roboter nicht gleichzeitig arbeiten und somit ist deren Transferleistung unwesentlich größer als die eines einzelnen Roboters.

Darüberhinaus ist der Nachteil dieser Vorrichtung darin zu sehen, daß die Roboter lediglich auf eine Stelle zugreifen können und somit das Speicherkarussell jeweils genau in einer für jede einzelne Kassette exakt definierten Stellung positioniert sein muß, was die Zugriffszeit groß werden läßt und somit die Transferleistung der Roboter gering hält.

Der Erfindung liegt daher die Aufgabe zugrunde, ein vollautomatisch arbeitendes Bandbedienungsarchiv zu schaffen, bei welchem, um den Speicher erweitern zu können, eine große Transferkapazität für die Bandkassetten zur Verfügung steht.

Diese Aufgabe wird gelöst durch ein vollautomatisch arbeitendes Bandbedienungsarchiv mit einem Kassettenfächer für Bandkassetten aufweisenden Speicher, der als Wendespeicher ausgebildet ist, wobei sämtliche Kassettenfächer sowohl in eine erste Roboterzugriffsposition als auch in eine zweite Roboterzugriffsposition bringbar sind, und mit einem ersten Roboter sowie einem zweiten Roboter zum Transportieren der Bandkassetten zwischen dem Speicher und mindestens einer jedem Roboter ausschließlich zugeordneten Bandeinheit, wobei dem ersten Roboter die ersten Roboterzugriffspositionen und dem zweiten Roboter die zweiten Roboterzugriffspositionen zugeordnet sind, wobei um ein gleichzeitiges Arbeiten der Roboter zu ermöglichen, jeder Roboter einen Aktionsbereich aufweist, der sich mit dem des jeweiligen anderen Roboters nicht überschneidet, und wobei die Roboter einen stationären Sockel und einen gegenüber diesem um eine erste Drehachse drehbaren ersten Arm aufweisen, erfindungsgemäß dadurch gelöst, daß der Wendespeicher mindestens zwei unabhängig voneinander bewegbare und nebeneinander stehende Wendeeinheiten aufweist, auf die sowohl der erste als auch der zweite Roboter Zugriff haben, daß jeder Roboter eine im wesentlichen vertikal verlaufende und auf dem stationären Sockel stehende Säule aufweist, daß längs der Säule ein Hebetisch auf und ab verfahrbar ist, daß der erste Arm auf dem Hebetisch um die erste Drehachse drehbar gelagert ist, daß die erste Drehachse parallel zur Säule steht, daß an dem ersten Arm seinerseits ein zweiter Arm um eine zur ersten Drehachse parallele zweite Drehachse schwenkbar gelagert ist und daß ein Greifer mittels des ersten Arms (46) um die erste Drehachse (48) und mittels des zweiten Arms um die zweite Drehachse schwenkbar ist.

Ferner wird diese Aufgabe auch gelöst durch ein vollautomatisch arbeitendes Bandbedienungsarchiv mit einem Kassettenfächer für Bandkassetten aufweisenden Speicher, der als Wendespeicher ausgebildet ist, wobei sämtliche Kassettenfächer sowohl in eine erste Roboterzugriffsposition als auch in eine zweite Roboterzugriffsposition bringbar sind, mit einem ersten Roboter und einem zweiten Roboter zum Transportieren der Bandkassetten zwischen dem Speicher und mindestens einer jedem Roboter ausschließlich zugeordneten Bandeinheit, wobei dem ersten Roboter die ersten Roboterzugriffspositionen und dem zweiten Roboter die zweiten Roboterzugriffspositionen zugeordnet sind, und wobei, um ein gleichzeitiges Arbeiten der Roboter zu ermöglichen, jeder Roboter einen Aktionsbereich aufweist, der sich mit dem des jeweils anderen Roboters nicht überschneidet, wobei erfindungsgemäß der Wendespeicher mindestens zwei unabhängig voneinander bewegbare und nebeneinander stehende Regaltürme aufweist, auf welche sowohl der erste als auch der zweite Roboter Zugriff haben, wobei die Regaltürme aus Regalelementen aufgebaut sind, die eine Vielzahl von in übereinanderliegenden Reihen angeordneten Kassettenfächern aufweisen, und wobei jedes Regalelement als Ganzes in die erste oder zweite Roboterzugriffsposition bringbar ist.

Der Vorteil dieser Lösungen ist darin zu sehen, daß in jeder Roboterzugriffsposition eine Vielzahl von Zugriffsmöglichkeiten für den Roboter gegeben ist, so daß dadurch die Transferkapazität des Roboters vergrößert wird, da der Wendespeicher so organisiert werden kann, daß in der Regel einer der Roboter auf einen der Wendespeicher zugreift und der andere auf den anderen und da außerdem die Wendespeicher so organisiert werden können, daß in einer Roboterzugriffsposition eine Vielzahl von Kassettenfächern zur Verfügung steht, so daß in der Regel ohne Weiterdrehen des Wendespeichers eine Kassette entnommen und eine Kassette abgelegt werden kann.

Weitere vorteilhafte Lösungen sind Gegenstand der jeweiligen Unteransprüche.

Die vorliegende Erfindung hat den großen Vorteil, daß durch die Bandkassetten im Wendespeicher ein einziger "Informations-Speicherpool" beibehalten wird, so daß generell die Möglichkeit besteht, zum Lesen oder Schreiben einer bestimmten Information jede im Speicher deponierte Bandkassette durch die Roboter zu jeder Bandeinheit zu transferieren, wobei gleichzeitig der Speicher beliebig erweiterbar ist, da man in diesem Fall die doppelte Roboterleistung zum Transport von Bandkassetten zu den Bandeinheiten zur Verfügung hat.

Die Erfindung äußert sich insbesondere vorteilhaft darin, daß bei dem erfindungsgemäßen Bandbedienungsarchiv die Bandkassetten für einen bestimmten Lese- oder Schreibvorgang sowohl von dem ersten als auch von dem zweiten Roboter greifbar und in eine der diesen zugeordneten Bandbedienungseinheiten einsetzbar sind, so daß beispielsweise bei der Reparatur oder dem Ausfall eines Roboters der gesamte "Informationspool" durch den anderen Roboter zugänglich ist.

Darüberhinaus ist durch die Tatsache, daß die beiden Roboter von verschiedenen Roboterzugriffspositionen aus auf den Speicher zugreifen, eine gegenseitige Behinderung der Roboter beim Zugriff auf Bandkassetten ausgeschlossen, so daß die Roboter unabhängig voneinander arbeiten können und Maßnahmen zur Vermeidung einer gegenseitigen Behinderung der Roboter nicht notwendig sind.

Schließlich ist ein derartiges Bandbedienungsarchiv vom Aufbau her sehr kostengünstig, da zwei selbständige Roboter einsetzbar sind.

Von den grundsätzlichen Möglichkeiten her gesehen könnten die Bandeinheiten so aufgestellt sein, daß beide Roboter auf jede Bandeinheit Zugriff haben, da die Bandkassetten relativ lange in den Bandeinheiten verbleiben und lediglich von einem Roboter eine Bandkassette entnommen werden kann. Im Hinblick auf eine möglichst einfache Steuerung und im Hinblick auf die Tatsache, daß in der Regel mehrere Bandeinheiten von einem Roboter bedient werden, ist es am einfachsten, wenn jedem Roboter mindestens eine Bandeinheit ausschließlich zugeordnet ist. Damit läßt sich jeder Roboter mit der maximalen Transferkapazität betreiben.

Obwohl erfindungsgemäß die Zugriffe zum Speicher von getrennten Roboterzugriffspositionen aus erfolgen, könnten gewisse Konstellationen eintreten, bei denen die Roboter sich hinsichtlich ihrer Aktionsbereiche überlappen. Um auch dies zu verhindern und somit zur steuerungstechnisch einfachsten Lösung zu kommen, ist von Vorteil, wenn jeder Roboter einen Aktionsbereich aufweist, der sich mit dem des jeweils anderen Roboters nicht überschneidet.

Besonders vorteilhaft im Rahmen der vorliegenden Erfindung ist es, wenn die Roboterzugriffspositionen von einer Außenseite, insbesondere einer Außenumfangsseite, des Wendespeichers für die Roboter zugänglich sind.

Der erfindungsgemäße Wendespeicher kann grundsätzlich auf die unterschiedlichste Art und Weise ausgebildet sein, solange er in der Lage ist, die obengenannten Anforderungen zu erfüllen. Als besonders zweckmäßig hat es sich erwiesen, wenn der Wendespeicher mindestens eine bewegbare und die Kassettenfächer umfassende Wendeeinheit aufweist.

Bei dieser Wendeeinheit handelt es sich im einfachsten Fall um einen drehbaren Regalturm, wobei vorteilhafterweise die Roboterzugriffspositionen von einer Außenumfangsseite des Regalturms für die Roboter zugänglich sind.

Noch besser ist es jedoch, um insbesondere auch die Roboter möglichst unabhängig voneinander betreiben zu können und Teile des Speichers unabhängig voneinander wenden zu können, wenn der Wendespeicher mindestens zwei Wendeeinheiten aufweist.

Im einfachsten Fall handelt es sich auch hierbei um einen Speicher, welcher Regaltürme aufweist, wobei vorzugsweise die drehbaren Regaltürme mit ihren Drehachsen parallel zueinander ausgerichtet sind.

Ferner dient der Entkopplung der Tätigkeit der beiden Roboter, wenn die Kassettenfächer jeder Wendeeinheit sowohl in die erste als auch in die zweite Roboterzugriffsposition bringbar sind. Vorteilhafterweise ist dann ein Wendespeicher mit mehreren Wendeeinheiten so ausgebildet, daß die Kassettenfächer jeder Wendeeinheit sowohl in eine nur für die Kassettenfächer dieser Wendeeinheit vorgesehene erste als auch eine für diese Kassettenfächer vorgesehene zweite Roboterzugriffsposition bringbar sind und folglich der Speicher bei mehreren Wendeeinheiten mehrere jeweils zu einer Wendeeinheit gehörende erste und mehrere jeweils zu einer Wendeeinheit gehörende zweite Roboterzugriffspositionen aufweist.

Hinsichtlich der Anordnung der Roboter hat es sich als besonders zweckmäßig erwiesen, wenn die erste und die zweite Roboterzugriffsposition im wesentlichen auf einander gegenüberliegenden Seiten des Speichers angeordnet sind, da damit konstruktiv eine einfache Möglichkeit besteht, die beiden Roboter unabhängig voneinander arbeiten zu lassen. Bezüglich der Ausbildung der Roboter selbst wurden im Rahmen der bisherigen Ausführungsbeispiele keine näheren Angaben gemacht. So ist es im Rahmen einer bevorzugten Ausführungsform möglich, daß der erste und der zweite Roboter stehende Roboter sind.

Um einen sicheren Zugriff des Roboters zu den einzelnen Kassettenfächern zu ermöglichen, ist vorgesehen, daß der Speicher so ausgebildet ist, daß die Kassettenfächer in der ersten und der zweiten Roboterzugriffsposition stets eine definierte Position einnehmen und somit von der Steuerung des Roboters her genau das Anfahren jedes Kassettenfaches vorgegeben werden kann.

Bei allen vorstehend beschriebenen Ausführungsbeispielen ist es besonders vorteilhaft, wenn die Roboter direkten Zugriff zu Einlegeschächten der Bandeinheit haben, das heißt, daß den Bandeinheiten keine Einlegevorrichtungen vorgeschaltet sind.

Darüberhinaus ist es bei allen bislang beschriebenen Ausführungsbeispielen besonders vorteilhaft, wenn die Roboter identisch ausgebildet sind.

Hinsichtlich der Wendespeicher, insbesondere in der Ausführung als Regaldrehtürme, wurden bislang keine detaillierten Ausführungen gemacht. Als besonders zweckmäßig hat es sich hierbei erwiesen, wenn jeder Regaldrehturm einen elektromotorischen Antrieb und eine Sensorsteuerung zur Positionierung desselben in allen gewünschten Drehstellungen aufweist.

Als besonders vorteilhafte selbständige Lösung im Rahmen der Erfindung hat sich eine Anordnung der Bandeinheiten erwiesen, bei welcher auf zwei sich gegenüberliegenden Seiten des Speichers Bandeinheiten angeordnet sind, die jeweils einen Abstand zum Speicher aufweisen und bei welcher in diesen Abständen je ein Roboter angeordnet ist.

Bei der vorstehenden Ausführungsform ist es besonders vorteilhaft, wenn der Speicher erfindungsgemäß als Wendespeicher ausgebildet ist. Dieser kann dann zweckmäßigerweise mindestens zwei Drehtürme aufweisen.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine schematische Draufsicht auf ein erstes Ausführungsbeispiel;
- Fig. 2: eine teilweise Frontansicht in Richtung des Pfeils A;
- Fig. 3: eine schematische Draufsicht auf ein zweites Ausführungsbeispiel und
- Fig. 4: eine schematische Draufsicht auf ein drittes Ausführungsbeispiel.

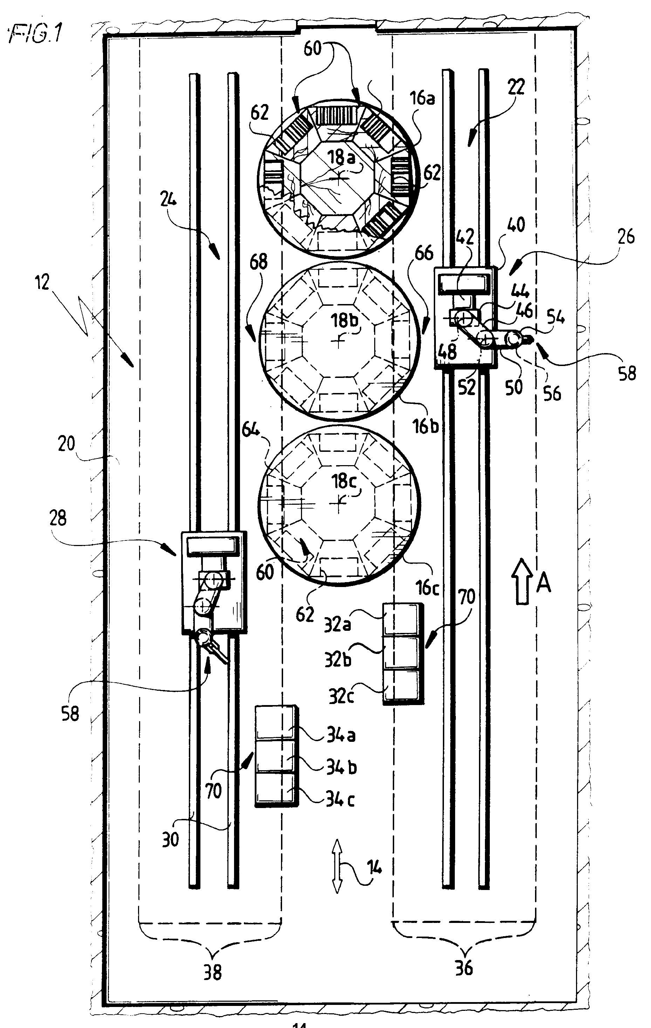

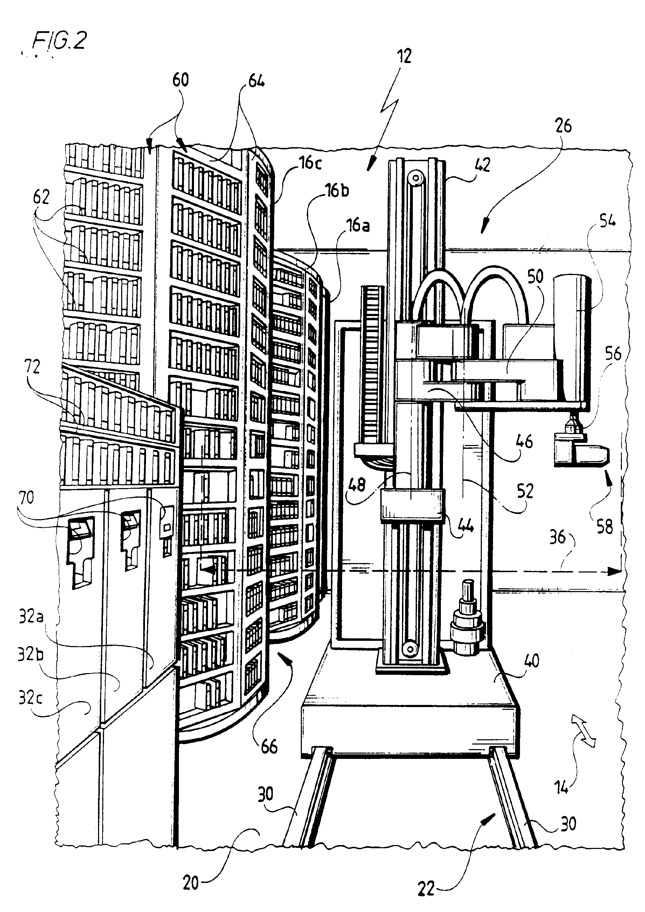

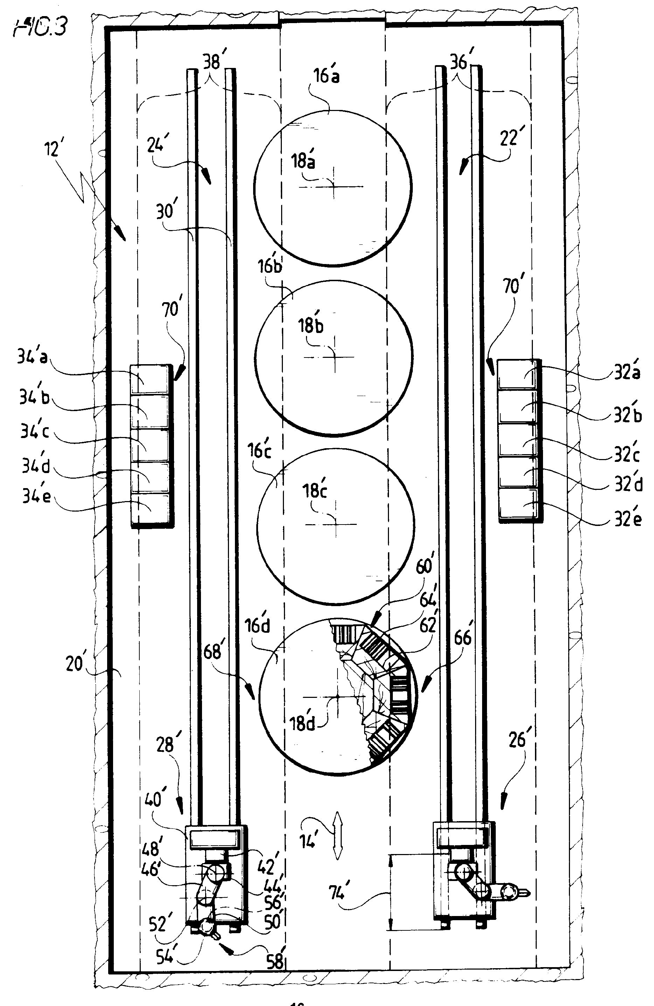

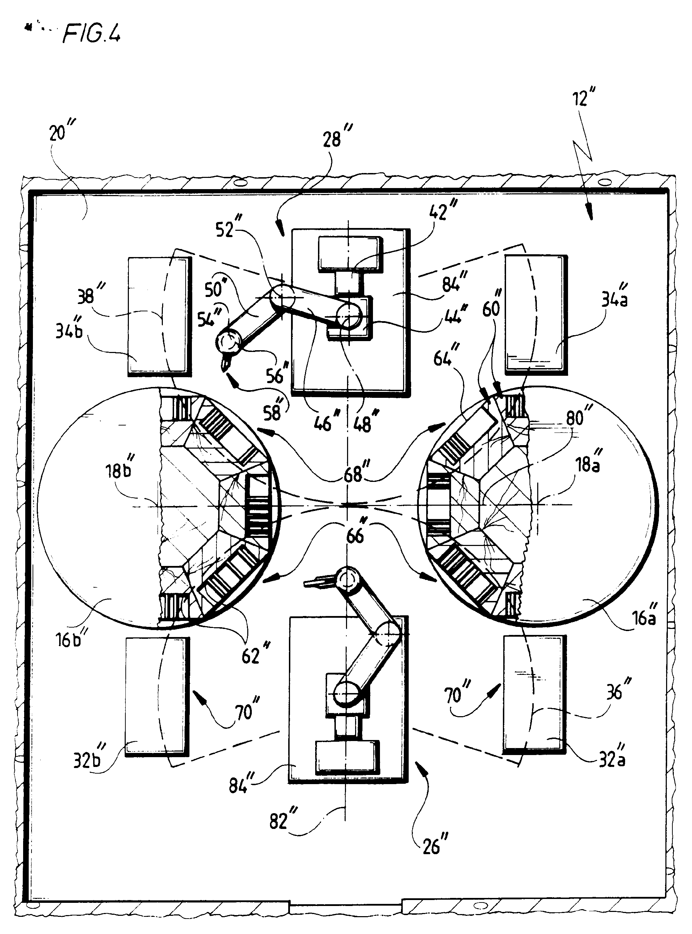

Ein erstes Ausführungsbeispiel eines erfindungsgemäßen vollautomatisch arbeitenden Bandbedienungsarchivs - dargestellt in Fig. 1 - umfaßt einen als Ganzes mit 12 bezeichneten Speicher, welcher beispielsweise drei in Längsrichtung 14 desselben aufeinanderfolgend angeordnete Regaldrehtürme 16a, b, c aufweist. Diese Regaldrehtürme 16a, b, c stehen mit ihren Drehachsen 18a, b, c senkrecht auf einer Bodenfläche 20 des Speichers 12 und sind um diese Drehachsen ohne Drehwinkelbegrenzung in beiden Drehrichtungen drehbar.

Beiderseits des Speichers 12, vorzugsweise parallel zu dessen Längsrichtung 14, verlaufen eine erste Bahn 22 und eine zweite Bahn 24, wobei auf der ersten Bahn 22 ein erster Roboter 26 und auf der zweiten Bahn 24 ein zweiter Roboter 28 in Längsrichtung derselben verfahrbar sind. Im einfachsten Fall umfassen die Bahnen 22 und 24 parallel zueinander verlaufende Schienen 30.

Längs der ersten und zweiten Bahn 22 und 24 sind zwischen denselben auf den Speicher 12 folgend zunächst erste Bandeinheiten 32a, b, c und auf diese folgend zweite Bandeinheiten 34a, b, c angeordnet, wobei die ersten Bandeinheiten 32 so neben der ersten Bahn 22 stehen, daß auf sie der erste Roboter 26 Zugriff hat und die zweiten Bandeinheiten 34 so neben der zweiten Bahn 24, daß auf sie der zweite Roboter 28 Zugriff hat.

Vorzugsweise sind dabei deren Aktionsbereiche 36 bzw. 38, in Fig. 1 gestrichelt dargestellt, das heißt diejenigen Bereiche, in welchen die Roboter 26 bzw. 28 auf eine Bandkassette zugreifen können, so gewählt, daß sie nicht überlappen.

Wie aus der ausschnittsweisen Darstellung in Fig. 2 zu ersehen, umfaßt der Roboter 26 ein Fahrgestell 40, welches auf den Schienen 30 der ersten Bahn 22 angetrieben und gesteuert in definierte Positionen längs der ersten Bahn 22 verfahrbar ist. Auf diesem Fahrgestell ist eine im wesentlichen vertikal zur Ebene der Schienen 30 stehende Säule 42 angeordnet, längs welcher ein Hebetisch 44 auf und ab verfahrbar ist. Auf diesem Hebetisch 44 ist ein erster Arm 46 um eine parallel zur Säule 42 stehende erste Drehachse 48 drehbar gelagert. An diesem ersten Arm 46 ist dann seinerseits ein zweiter Arm 50 um eine zur ersten Drehachse parallele zweite Drehachse 52 schwenkbar gelagert. Am Ende des zweiten Arms 50 ist eine Längsführung 54 angeordnet, in welcher ein dritter Arm 56 parallel zur ersten Drehachse 48 und zur zweiten Drehachse 52 verschieblich geführt ist.

Dieser dritte Arm 56 trägt seinerseits einen Greifer 58 zum Greifen von Bandkassetten.

Vorzugsweise ist bei dem in Fig. 1 zeichnerisch dargestellten ersten Ausführungsbeispiel der zweite Roboter 28 identisch wie der erste Roboter 26 ausgebildet.

Die Regaldrehtürme 16a, b, c des Speichers 12 sind vorzugsweise aus beispielsweise acht oder mehr Regalelementen 60 aufgebaut, welche eine Vielzahl von Kassettenfächern 62, vorzugsweise in übereinanderliegenden Reihen angeordnet, aufweisen. Die Regaltürme 16a, b, c sind dabei so drehbar, daß die Regalelemente mit ihrer Frontseite 64 parallel zu der ersten Bahn 22 oder der zweiten Bahn 24 ausgerichtet werden können. Jedes Regalelement 60, welches mit seiner Frontseite 64 parallel zur ersten Bahn 22 oder zur zweiten Bahn 24 steht, ist dabei in einer ersten Roboterzugriffsposition 66 bzw. zweiten Roboterzugriffsposition 68. Vorzugsweise ist bei parallelen Bahnen 22 und 24 jeder Regaldrehturm in eine Stellung bringbar, in welcher sowohl die Kassettenfächer 62 eines Regalelements 60 in der ersten Roboterzugriffsposition 66 und die Kassettenfächer 62 eines weiteren Regalelements 60 in der zweiten Roboterzugriffsposition stehen.

Das automatische Bandbedienungsarchiv gemäß dem ersten Ausführungsbeispiel funktioniert nun so, daß zum Lesen oder Schreiben einer bestimmten Information beispielsweise der erste Roboter 26 mit seinem Greifer 58 eine Bandkassette aus den in der ersten Roboterzugriffsposition 66 stehenden Kassettenfächer 62 auswählt, herausgreift, zu einer der ersten Bandeinheiten 32a, b, oder c transportiert und sie in einen Einlegeschacht 70 der jeweiligen ersten Bandeinheit 32a, b, c einführt.

Gleichzeitig kann der zweite Roboter 28 mit seinem Greifer 58 vorzugsweise eine Bandkassette von einem der Regaldrehtürme 16b oder c aus einem der in der zweiten Roboterzugriffsposition 68 stehenden Kassettenfächer 62 herausnehmen und ebenfalls zu einer der zweiten Bandeinheiten 34a, b oder c transportieren oder auch aus einer der zweiten Bandeinheiten 34a, b oder c eine Bandkassette entnehmen und in ein in der zweiten Roboterzugriffsposition 68 stehendes Kassettenfach 62 von einem der drei Regaldrehtürme 16a, b oder c einsetzen. Die Tätigkeiten der Roboter 26 und 28 sind jedoch gegeneinander austauschbar.

Bei einer bevorzugten Alternative des ersten Ausführungsbeispiels können über den Bandeinheiten 32a, b, c, wie in Fig. 2 dargestellt, auch noch Zwischenspeicherregale 72 vorgesehen sein, über welche beispielsweise die Entnahme oder das Einbringen von Bandkassetten in das Bandbedienungsarchiv erfolgt.

Der jeweilige Roboter 26 oder 28 hat dann auch auf diese Zwischenspeicherregale 72 Zugriff.

Darüber hinaus besteht aber auch noch die Möglichkeit, die Zwischenspeicherregale neben den ersten Bandeinheiten 32a, b und c anzuordnen, das heißt beispielsweise in Fortsetzung der Bandeinheiten 32a, b, c in Höhe der zweiten Bandeinheiten 34, wobei das Zwischenspeicherregal 72 dann ebenfalls lediglich im Aktionsbereich 36 des ersten Roboters 26 stehen würde.

Ein zweites Ausführungsbeispiel des erfindungsgemäßen Bandbedienungsarchivs, dargestellt in Fig. 3, ist insoweit als dieselben Teile Verwendung finden, mit denselben Bezugszeichen wie das erste Ausführungsbeispiel versehen, wobei die Elemente zusätzlich mit einem Strich gekennzeichnet sind. Bezüglich der detaillierten Beschreibung dieser Teile wird auf die Ausführungen zum ersten Ausführungsbeispiel verwiesen.

Im Gegensatz zum ersten Ausführungsbeispiel umfaßt der Speicher 12' nicht nur drei, sondern insgesamt vier Regaldrehtürme 16'a, b, c, d, die jedoch ebenfalls aufeinanderfolgend in Längsrichtung 14' des Speichers 12' angeordnet sind.

In gleicher Weise sind auch die Regalelemente 60' identisch wie die Regalelemente 60 des ersten Ausführungsbeispiels ausgebildet, so daß die Kassettenfächer 62' in erste oder zweite Roboterzugriffspositionen 66' bzw. 68' bringbar sind, wobei - genau wie beim ersten Ausführungsbeispiel - sämtliche erste Roboterzugriffspositionen 66' in Längsrichtung 14' des Speichers 12' nebeneinanderliegend im Aktionsbereich 66' des ersten Roboters 26' neben der ersten Bahn 22' angeordnet sind. Gleiches gilt für die zweiten Roboterzugriffspositionen 68'.

Im Gegensatz zum ersten Ausführungsbeispiel sind bei dem zweiten Ausführungsbeispiel gemäß Fig. 3 die ersten Bandeinheiten 32' und zweiten Bandeinheiten 34' nicht zwischen den Bahnen 22' und 24' angeordnet, sondern jeweils dem Speicher 12' gegenüberliegend und vorzugsweise mittig desselben, so daß bei den in Fig. 3 dargestellten ersten Bandeinheiten 32'a, b, c, d, e und 34'a, b, c, d, e diese jeweils, bezogen auf die Längsrichtung 14', in Höhe der beiden mittleren Regaldrehtürme 16'b und 16'c stehen.

Damit ist die Möglichkeit geschaffen, daß die Bahnen 22' und 24' kürzer gewählt werden können, so daß sich diese nur noch so weit längs des Speichers 12' erstrecken müssen, daß die Roboter 26' und 28' Zugriff zu allen Regaldrehtürmen 16'a, b, c, d haben.

Vorzugsweise sind die Bahnen 22' und 24' noch um ein Stück 74' verlängert, welches so bemessen ist, daß der jeweilige Roboter 26' oder 28' so weit verfahren werden kann, daß er nicht mehr in Höhe eines der Regaldrehtürme 16'a, b, c, d steht.

Ferner besteht bei dem zweiten, in Fig. 3 dargestellten Ausführungsbeispiel die Möglichkeit, die Zwischenspeicherregale 72' in Längsrichtung 14' auf die Bandeinheiten 32' oder 34' folgend anzuordnen.

Vom Prinzip her funktioniert das zweite Ausführungsbeispiel des erfindungsgemäßen vollautomatischen Bandbedienungsarchivs, in gleicher Weise wie das erste Ausführungsbeispiel, das heißt, jeder der Roboter entnimmt oder setzt Bandkassetten in in der jeweiligen Roboterzugriffsposition stehende Kassettenfächer ein und transportiert diese entweder zu der jeweiligen Bandeinheit 32' bzw. 34' oder holt sie von dieser ab.

Beispielsweise funktioniert dies so, daß das vollautomatisch arbeitende Bandbedienungsarchiv seine "Befehle" von einer zeichnerisch nicht dargestellten Großrechnereinheit erhält, die üblicherweise abseits von dem Bunker, in dem das Bandbedienungsarchiv installiert ist, steht. Die Verbindung zwischen der CPU-Großrechnereinheit und dem Bandbedienungsarchiv wird über ein Kabelsystem hergestellt. Die CPU-Großrechnereinheit erteilt zum Ausführen eines bestimmten Lese- oder Schreibvorgangs zunächst einem, egal welchem, der beiden Roboter 26' oder 28' den "Befehl" aus einem bestimmten Regaldrehturm 16a, b, c oder d des Speichers 12' eine Bandkassette zu holen und diese zu einer der Bandeinheiten 32'a, b, c, d oder e bzw. 34'a, b, c, d oder e zu bringen und dort einzulegen.

Gleichzeitig ergeht an den ausgewählten Drehturm 16'a, b, c oder d von der CPU-Großrechnereinheit die Order, sich so in Richtung auf den beauftragten Roboter 26' oder 28' zu drehen, daß die zu entnehmende Bandkassette in der Roboterzugriffsposition 66' oder 68' steht, wobei diese vorzugsweise so ist, daß die Bandkassette im rechten Winkel zur Bahn 22' bzw. 24', das heißt beim bevorzugten Ausführungsbeispiel der Fig. 3, im rechten Winkel zur Längsrichtung 14' des Speichers 12', ausgerichtet ist und dadurch für den Greifer 58' des Roboters 26' bzw. 28' entnehmbar.

Die Steuerung und Drehung des Regaldrehturms 16'a, b, c oder d erfolgt über einen im Drehtrum eingebauten, zeichnerisch nicht dargestellten elektromotorischen Antrieb und eine ebenfalls eingebaute Sensorsteuerung.

Vorzugsweise mit Hilfe eines Barcodelasers oder eines anderen im Greifer 58' installierten Lesesystems des Roboters 26' oder 28' kann über den Barcode auf der Bandkassette diese als die richtige erkannt und vom Greifer 58' aus dem entsprechenden Kassettenfach 62' des jeweiligen Regaldrehturms 16'a, b oder c entnommen werden.

Diese Bandkassette wird nur mit Hilfe des Roboters 26' oder 28' zur jeweiligen Bandeinheit 32'a, b, c, d oder e bzw. 34'a, b, c, d oder e befördert und dort in die entsprechende Bandeinheit eingelegt.

Der Rücktransport der Kassette von der Bandeinheit von 32'a, b, c, d oder e bzw. 34'a, b, c, d oder e zum jeweiligen Regaldrehturm 16'a, b, c oder d erfolgt in umgekehrter Reihenfolge, wobei alle "Befehle" hierzu wieder von der CPU-Großrechnereinheit ausgehen.

Das vollautomatisch arbeitende Bandbedienungsarchiv ist so konzipiert, daß jede Bandkassette in jede der Bandeinheiten 32'a, b, c, d oder e oder 34'a, b, c, d oder e eingelegt werden kann und in jeder der Bandeinheiten der gesamte Informationsgehalt einer Bandkassette zugänglich ist.

Bei einem weiteren Ausführungsbeispiel eines erfindungsgemäßen Bandbedienungsarchivs, dargestellt in Fig. 4, tragen diejenigen Elemente, die mit denen des ersten Ausführungsbeispiels identisch sind, dieselben Bezugszeichen. Diese sind jedoch mit zwei Strichen versehen. Bezüglich deren detaillierter Beschreibung kann somit auf das erste Ausführungsbeispiel verwiesen werden.

Der Speicher 12'' im dritten Ausführungsbeispiel umfaßt zwei Regaldrehtürme 16''a und 16''b, welche um zueinander parallele Drehachsen 18'' drehbar sind. Vorzugsweise sind diese beiden Regaldrehtürme 16''a und 16''b so dicht beieinander, daß die Regalelemente 60'' in Richtung einer Verbindungslinie 80'' der beiden Drehachsen 18'' einen geringen Abstand voneinander aufweisen.

Beiderseits der Verbindungslinie sind ein erster Roboter 26'' und ein zweiter Roboter 28'' symmetrisch zu einer Mittelsenkrechten 82'' der Verbindungslinie 80'' angeordnet, so daß deren Greifer 58'' sowohl Zugriff zu den Kassettenfächern 62'' des Regaldrehturms 16''a als auch des Regaldrehturms 16''b haben. Vorzugsweise ist hierzu die erste Drehachse 48'' der Roboter 26'' bzw. 28'' auf der Mittelsenkrechten angeordnet.

Die Roboter 26'' und 28'' sind bis auf das fehlende Fahrgestell 40 mit den Robotern 26 und 28 identisch. Anstelle des Fahrgestells 40 steht die Säule 42'' auf einem stationären Sockel 84''.

Die Regalelemente 60'' der Regaldrehtürme 16''a, b stehen dann in der ersten Roboterzugriffsposition 66'', wenn deren Frontseiten 64'' vorzugsweise einen spitzen Winkel mit der Mittelsenkrechten 82'' einschließen. Vorzugsweise liegt dieser Winkel in der Größenordnung von ungefähr 45°, wobei dann die Frontseite 64'' des jeweiligen Regalelements 60'' des ersten Regaldrehturms 16''a mit der Frontseite 64'' des in der entsprechenden Stellung stehenden Regalelements 60'' des Regaldrehturms 16''b einen Winkel in der Größenordnung von 90° einschließt.

Gleiches gilt für die zweiten Roboterzugriffspositionen 68'' der Regaldrehtürme 16''a und 16''b.

Vorzugsweise liegen die ersten Roboterzugriffspositionen 66'' bzw. die zweiten Roboterzugriffspositionen 68'' der Kassettenfächer 62'' des Regaldrehturms 16''a und 16''b symmetrisch zu der Mittelsenkrechten 82''.

In jedem Fall ist die Länge der Arme 46'' und 50'' so bemessen, daß sämtliche Kassettenfächer 62'' eines Regalelements 60'' vom Roboter 26'' bzw. 28'' gegriffen werden können.

Die Bandeinheiten 32'' und 34'' sind vorzugsweise seitlich der Mittelsenkrechten 82'' angeordnet, sie können jedoch auch an anderer Position im Aktionsbereich des jeweiligen Roboters 26'' bzw. 28'' angeordnet sein.

Vorzugsweise sind auf gegenüberliegenden Seiten der Mittelsenkrechten 82'' die ersten Bandeinheiten 32''a und 32''b bzw. zweite Bandeinheiten 34''a und 34''b angeordnet und liegen damit im Aktionsbereich 36'' bzw. 38'' des Roboters 26'' bzw. 28'', wobei ihre Bandeinlegeöffnungen 70'' dem jeweiligen Roboter 26'' bzw. 28'' zugeordnet sind.

## Patentansprüche

1. Vollautomatisch arbeitendes Bandbedienungsarchiv mit einem Kassettenfächer für Bandkassetten aufweisenden Speicher (12''), der als Wendespeicher ausgebildet ist, wobei sämtliche Kassettenfächer (62'') sowohl in eine erste Roboterzugriffsposition (66'') als auch in eine zweite Roboterzugriffsposition (68'') bringbar sind, und mit einem ersten Roboter (26'') sowie einem zweiten Roboter (28'') zum Transportieren der Bandkassetten zwischen dem Speicher (12'') und mindestens einer jedem Roboter (26'', 28'') ausschließlich zugeordneten Bandeinheit (32'', 34''), wobei dem ersten Roboter (26'') die ersten Roboterzugriffspositionen (66'') und dem zweiten Roboter (28'') die zweiten Roboterzugriffspositionen (68'') zugeordnet sind, wobei, um ein gleichzeitiges Arbeiten der Roboter (26'', 28'') zu ermöglichen, jeder Roboter (26'', 28'') einen Aktionsbereich (36'', 38'') aufweist, der sich mit dem des jeweils anderen Roboters (28'', 26'') nicht überschneidet, und wobei die Roboter (26'', 28'') einen stationären Sockel (84'') und einen gegenüber diesem um eine erste Drehachse (48'') drehbaren ersten Arm (46'') aufweisen,
**dadurch gekennzeichnet,**
daß der Wendespeicher mindestens zwei unabhängig voneinander bewegbare und nebeneinander stehende Wendeeinheiten (16'') aufweist, auf die sowohl der erste als auch der zweite Roboter (26'', 28'') Zugriff haben, daß jeder Roboter eine im wesentlichen vertikal verlaufende und auf dem stationären Sockel (84'') stehende Säule (42'') aufweist, daß längs der Säule (42'') ein Hebetisch (44) auf und ab verfahrbar ist, daß der erste Arm (46'') auf dem Hebetisch (44) um die erste Drehachse (48'') drehbar gelagert ist, daß die erste Drehachse (48'') parallel zur Säule (42'') steht, daß an dem ersten Arm (46'') seinerseits ein zweiter Arm (50'') um eine zur ersten Drehachse (48'') parallele zweite Drehachse (52'') schwenkbar gelagert ist und daß ein Greifer (58'') mittels des ersten Arms (46'') um die erste Drehachse (48'') und mittels des zweiten Arms (46'') um die zweite Drehachse (52'') schwenkbar ist.

2. Bandbedienungsarchiv nach Anspruch 1, dadurch gekennzeichnet, daß am Ende des zweiten Arms (50'') eine Längsführung (54'') angeordnet ist, in welcher ein dritter Arm (56'') parallel zur ersten Drehachse (48'') und zur zweiten Drehachse verschieblich geführt ist und daß der dritte Arm (56'') seinerseits den Greifer (58'') trägt.

3. Bandbedienungsarchiv nach Anspruch 1 oder 2, dadurch gekennzeichnet, daß jede Wendeeinheit ein drehbarer Regalturm (16'') ist.

4. Bandbedienungsarchiv nach Anspruch 3, dadurch gekennzeichnet, daß die drehbaren Regaltürme (16'') mit ihren Drehachsen (18'') parallel zueinander ausgerichtet sind.

5. Bandbedienungsarchiv nach Anspruch 3 oder 4, dadurch gekennzeichnet, daß die Roboter (26'', 28'') symmetrisch zu einer Mittelsenkrechten (82'') einer Verbindungslinie (80'') zwischen den Drehachsen (18'') der Regaltürme (16'') angeordnet sind.

6. Bandbedienungsarchiv nach Anspruch 5, dadurch gekennzeichnet, daß die erste Drehachse (48'') der Roboter (26'', 28'') auf der Mittelsenkrechten (82'') liegt.

7. Bandbedienungsarchiv nach einem der voranstehenden Ansprüche, dadurch gekennzeichnet, daß der Wendespeicher mindestens zwei unabhängig voneinander bewegbare und nebeneinander stehende Regaltürme (16'') aufweist, auf welche sowohl der erste (26'') als auch der zweite Roboter (28'') Zugriff haben, daß die Regaltürme (16'') aus Regalelementen (60'') aufgebaut sind, die eine Vielzahl von in übereinanderliegenden Reihen angeordneten Kassettenfächern (62) aufweisen, daß jedes Regalelement (60'') als Ganzes in die erste oder zweite Roboterzugriffsposition (66'', 68'') bringbar ist.

8. Vollautomatisch arbeitendes Bandbedienungsarchiv mit einem Kassettenfächer für Bandkassetten aufweisenden Speicher (12''), der als Wendespeicher ausgebildet ist, wobei sämtliche Kassettenfächer (62'') sowohl in eine erste Roboterzugriffsposition (66'') als auch in eine zweite Roboterzugriffsposition (68'') bringbar sind, mit einem ersten Roboter (26'') und einem zweiten Roboter (28'') zum Transportieren der Bandkassetten zwischen dem Speicher (12) und mindestens einer jedem Roboter (26'', 28'') ausschließlich zugeordneten Bandeinheit (32'', 34''), wobei dem ersten Roboter (26'') die ersten Roboterzugriffspositionen (66'') und dem zweiten Roboter (28'') die zweiten Roboterzugriffspositionen (68'') zugeordnet sind und wobei, um ein gleichzeitiges Arbeiten der Roboter (26'', 28'') zu ermöglichen, jeder Roboter (26'', 28'') einen Aktionsbereich (36'', 38'') aufweist, der sich mit dem des jeweils anderen Roboters (28'', 26'') nicht überschneidet,
**dadurch gekennzeichnet,**
daß der Wendespeicher mindestens zwei unabhängig voneinander bewegbare und nebeneinander stehende Regaltürme (16'') aufweist, auf welche sowohl der erste (26'') als auch der zweite Roboter (28'') Zugriff haben, daß die Regaltürme (16'') aus Regalelementen (60'') aufgebaut sind, die eine Vielzahl von in übereinander liegenden Reihen angeordneten Kassettenfächern (62'') aufweisen, und daß jedes Regalelement (60'') als Ganzes in die erste oder zweite Roboterzugriffsposition (66'', 68'') bringbar ist.

9. Bandbedienungsarchiv nach Anspruch 7 oder 8, dadurch gekennzeichnet, daß der Speicher (12'') so ausgebildet ist, daß die Kassettenfächer (62'') in der ersten (66'') und der zweiten Roboterzugriffsposition (68'') stets eine definierte Position einnehmen.

10. Bandbedienungsarchiv nach einem der Ansprüche 7 bis 9, dadurch gekennzeichnet, daß die Regalelemente (60'') in der ersten und zweiten Roboterzugriffsposition (66'', 68'') mit ihren Frontseiten (64'') einen spitzen Winkel mit einer Mittelsenkrechten (82'') auf einer Verbindungslinie (80'') zwischen den beiden Drehachsen (18'') der Regaltürme (16'') aufweisen.

11. Bandbedienungsarchiv nach Anspruch 10, dadurch gekennzeichnet, daß der spitze Winkel in der Größenordnung von ungefähr 45° liegt.

12. Bandbedienungsarchiv nach Anspruch 10 oder 11, dadurch gekennzeichnet, daß die ersten Roboterzugriffspositionen (66'') und die zweiten Roboterzugriffspositionen (68'') symmetrisch zur Mittelsenkrechten (82'') liegen.

13. Bandbedienungsarchiv nach einem der Ansprüche 7 bis 12, dadurch gekennzeichnet, daß der erste Arm (46'') und der zweite Arm (50'') so bemessen sind, daß jeder Roboter (26'', 28'') mit dem Greifer (58'') in sämtliche Kassettenfächer (62'') eines in seiner Roboterzugriffsposition (66'', 68'') stehenden Regalelements (60'') greifen kann.

14. Bandbedienungsarchiv nach einem der voranstehenden Ansprüche, dadurch gekennzeichnet, daß die Bandeinheiten (32'', 34'') auf zwei sich gegenüberliegenden Seiten des Speichers (12'') angeordnet sind und jeweils einen Abstand zum Speicher (12'') aufweisen und daß in diesen Abständen je einer der Roboter (26'', 28'') angeordnet ist.

15. Bandbedienungsarchiv nach einem der voranstehenden Ansprüche, dadurch gekennzeichnet, daß eine Steuerung vorgesehen ist, welche einem der beiden Roboter (26'', 28'') den Befehl gibt, eine Bandkassette aus einer bestimmten Wendeeinheit (16'') zu entnehmen und in eine der Bandeinheiten (32'', 34'') einzulegen und gleichzeitig dieser Wendeeinheit (16'') die Order gibt, sich so in Richtung auf den beauftragten Roboter (26'', 28'') zu drehen, daß die jeweilige Bandkassette in der Roboterzugriffsposition (66'', 68'') steht.

16. Bandbedienungsarchiv nach einem der voranstehenden Ansprüche, dadurch gekennzeichnet, daß jeder Roboter (26'', 28'') einen Greifer (58'') mit einem in diesem installierten Lesesystem zum Erkennen der jeweiligen Bandkassette aufweist.

17. Bandbedienungsarchiv nach Anspruch 16, dadurch gekennzeichnet, daß das Lesesystem ein Barcodelesesystem ist.

## Claims

1. Fully automatic tape-handling archive comprising a storage facility (12'') having cassette compartments for tape cassettes, said storage facility being designed as a revolving storage facility, all the cassette compartments (62'') being adapted to be brought into both a first robot access position (66'') and a second robot access position (68''), and a first robot (26'') as well as a second robot (28'') for transporting the tape cassettes between the storage facility (12'') and at least one tape unit (32'', 34'') associated exclusively with each robot (26'', 28''), the first robot access positions (66'') being associated with the first robot (26'') and the second robot access positions (68'') with the second robot (28''), wherein to facilitate a simultaneous operation of the robots (26'', 28'') each robot (26'', 28'') has a zone of activity (36'', 38'') not overlapping with that of the respective other robot (28'', 26''), and wherein the robots (26'', 28'') have a stationary base (84'') and a first arm (46'') rotatable relative thereto about a first axis of rotation (48''), characterized in that the revolving storage facility has at least two revolving units (16'') positioned next to one another and movable independently of one another, both the first and second robots (26'', 28'') having access to said revolving units, that each robot has a column (42'') positioned on the stationary base (84'') and extending essentially vertically, that a lifting table (44) is displaceable up and down along the column (42''), that the first arm (46'') is mounted on the lifting table (44) for rotation about the first axis of rotation (48''), that the first axis of rotation (48'') is parallel to the column (42''), that a second arm (50'') is mounted on the first arm (46'') for pivoting movement about a second axis of rotation (52'') parallel to the first axis of rotation (48'') and that a gripping means (58'') is pivotable about the first axis of rotation (48'') by means of the first arm (46'') and about the second axis of rotation (52'') by means of the second arm (46'').

2. Tape-handling archive as defined in claim 1, characterized in that a longitudinal guide (54'') is arranged at the end of the second arm (50''), a third arm (56'') being guided therein for displacement parallel to the first axis of rotation (48'') and to the second axis of rotation, and that the third arm (56''), for its part, bears the gripping means (58'').

3. Tape-handling archive as defined in claim 1 or 2, characterized in that each revolving unit is a rotatable shelf carousel (16'').

4. Tape-handling archive as defined in claim 3, characterized in that the rotatable shelf carousels (16'') are aligned with their axes of rotation (18'') parallel to one another.

5. Tape-handling archive as defined in claim 3 or 4, characterized in that the robots (26'', 28'') are arranged symmetrically to a vertical bisector (82'') of a connecting line (80'') between the axes of rotation (18'') of the shelf carousels (16'').

6. Tape-handling archive as defined in claim 5, characterized in that the first axis of rotation (48'') of the robots (26'', 28'') is positioned on the vertical bisector (82'').

7. Tape-handling archive as defined in any of the preceding claims, characterized in that the revolving storage facility has at least two shelf carousels (16'') positioned next to one another and movable independently of one another, both the first (26'') and the second robot (28'') having access to said shelf carousels, that the shelf carousels (16'') are constructed of shelf elements (60'') having a plurality of cassette compartments (62) arranged in superposed rows, that each shelf element (60'') is adapted to be brought as a whole into the first or second robot access position (66'', 68'').

8. Fully automatic tape-handling archive comprising a storage facility (12'') having cassette compartments for tape cassettes, said storage facility being designed as a revolving storage facility, all the cassette compartments (62'') being adapted to be brought into both a first robot access position (66'') and a second robot access position (68''), a first robot (26'') and a second robot (28'') for transporting the tape cassettes between the storage facility (12) and at least one tape unit (32'', 34'') associated exclusively with each robot (26'', 28''), the first robot access positions (66'') being associated with the first robot (26'') and the second robot access positions (68'') with the second robot (28''), and to facilitate a simultaneous operation of the robots (26'', 28'') each robot (26'', 28'') having a zone of activity (36'', 38'') not overlapping with that of the respective other robot (28'', 26''), characterized in that the revolving storage facility has at least two shelf carousels (16'') positioned next to one another and movable independently of one another, both the first (26'') and the second robot (28'') having access to said shelf carousels, that the shelf carousels (16'') are constructed of shelf elements (60'') having a plurality of cassette compartments (62'') arranged in superposed rows, and that each shelf element (60'') is adapted to be brought as a whole into the first or second robot access position (66'', 68'').

9. Tape-handling system as defined in claim 7 or 8, characterized in that the storage facility (12'') is designed such that the cassette compartments (62'') always take up a defined position in the first (66'') and the second robot access position (68'').

10. Tape-handling archive as defined in any of claims 7 to 9, characterized in that in the first and second robot access positions (66'', 68'') the shelf elements (60'') form with their front sides (64'') an acute angle with a vertical bisector (82'') to a connecting line (80'') between the two axes of rotation (18'') of the shelf carousels (16'').

11. Tape-handling archive as defined in claim 10, characterized in that the acute angle is in the order of approximately 45°.

12. Tape-handling archive as defined in claim 10 or 11, characterized in that the first robot access positions (66'') and the second robot access positions (68'') are symmetrical to the vertical bisector (82'').

13. Tape-handling archive as defined in any of claims 7 to 12, characterized in that the first arm (46'') and the second arm (50'') are dimensioned such that each robot (26'', 28'') can engage in all the cassette compartments (62'') of a shelf element (60'') located in its robot access position (66'', 68'') with the gripping means (58'').

14. Tape-handling archive as defined in any of the preceding claims, characterized in that the tape units (32'', 34'') are arranged on two opposite sides of the storage facility (12'') and are each spaced from the storage facility (12'') and that one of the robots (26'', 28'') is arranged in each of these spaces.

15. Tape-handling archive as defined in any of the preceding claims, characterized in that a control is provided for giving one of the two robots (26'', 28'') the command to remove a tape cassette from a specific revolving unit (16'') and to insert it into one of the tape units (32'', 34'') and for simultaneously giving this revolving unit (16'') the command to rotate in the direction towards the commanded robot (26'', 28'') such that the respective tape cassette is in the robot access position (66'', 68'').

16. Tape-handling archive as defined in any of the preceding claims, characterized in that each robot (26'', 28'') has a gripping means (58'') with a read system installed therein for recognizing the respective tape cassette.

17. Tape-handling archive as defined in claim 16, characterized in that the read system is a bar code reading system.

## Revendications

1. Système d'archivage de bandes à fonctionnement complètement automatique, comportant un magasin (12''), agencé comme un magasin réversible et pourvu de casiers de réception de cassettes de bandes, tous les casiers à cassettes (62'') pouvant être amenés aussi bien dans une première position d'accès de robot (66'') que dans une seconde position d'accès de robot (68''), ainsi qu'un premier robot (26'') et un second robot (28'') pour transporter les cassettes de bandes entre le magasin (12'') et au moins une unité à bandes (32'', 34'') associée exclusivement à chaque robot (26'', 28''), les premières positions (66'') d'accès de robot étant associées au premier robot (26'') et les secondes positions (68'') d'accès de robot étant associées au second robot (28''), chaque robot (26'', 28'') comportant une zone d'action (36'', 38''), qui ne coupe pas celle de l'autre robot (28'',26''), de façon à permettre un fonctionnement simultané des robots (26'', 28''), et les robots (26'', 28'') comportant un socle stationnaire (84'') et un premier bras (46'') pouvant tourner par rapport au socle autour d'un premier axe de rotation (48''), caractérisé en ce que le magasin réversible comporte au moins deux ensembles réversibles (16'') situés l'un à côté de l'autre et pouvant se déplacer indépendamment l'un de l'autre, et dans lesquels ont accès aussi bien le premier robot que le second robot (26'', 28''), en ce que chaque robot comporte une colonne (42'') orientée sensiblement verticalement et située sur le socle stationnaire (84''), en ce qu'une table de levage (44) peut se déplacer vers le haut et vers le bas le long de la colonne (42''), en ce que le premier bras (46'') est monté sur la table de levage (44) de façon à pouvoir tourner autour du premier axe de rotation (48''), en ce que le premier axe de rotation (48'') est orienté parallèlement à la colonne (42''), en ce que sur le premier bras (46'') est monté en pivotement de son côté un second bras (50'') qui pivote autour d'un second axe de rotation (52'') parallèle au premier axe de rotation (48'') et en ce qu'une pince (58'') peut pivoter sous l'action du premier bras (46'') autour du premier axe de rotation (48'') et sous l'action du second bras (46'') autour du second axe de rotation (52'').

2. Système d'archivage de bandes selon la revendication 1, caractérisé en ce qu'il est prévu à une extrémité du second bras (50'') un guide longitudinal (54''), dans lequel est guidé en translation un troisième bras (56'') parallèlement au premier axe de rotation (48'') et au second axe de rotation et en ce que le troisième bras (56'') porte de son côté la pince (58'').

3. Système d'archivage de bandes selon la revendication 1 ou 2, caractérisé en ce que chaque ensemble réversible est une tour rotative à rayonnages (16'').

4. Système d'archivage de bandes selon la revendication 3, caractérisé en ce que les tours rotatives à rayonnages (16'') sont orientées de manière que leurs axes de rotation (18'') soient mutuellement parallèles.

5. Système d'archivage de bandes selon la revendication 3 ou 4, caractérisé en ce que les robots (26'',28'') sont disposés symétriquement par rapport à une médiatrice (82'') d'une droite de liaison (80'') des axes de rotation (18'') des tours rotatives à rayonnages (16'').

6. Système d'archivage de bandes selon la revendication 5, caractérisé en ce que le premier axe de rotation (48'') des robots (26'',28'') est situé sur la médiatrice (82'').

7. Système d'archivage de bandes selon l'une des revendications précédentes, caractérisé en ce que le magasin réversible comprend au moins deux tours à rayonnages (16'') , situées l'une à côté de l'autre, déplaçables indépendamment l'une de l'autre et dans lesquelles ont accès aussi bien le premier robot (26'') que le second robot (28''), en ce que les tours à rayonnages (16'') sont constituées d'éléments de rayonnages (60''), qui comprennent un grand nombre de casiers à cassettes (62'') disposés dans des rangées situées les unes au-dessus des autres et en ce que chaque élément de rayonnage (60'') peut être amené dans son ensemble dans la première ou la seconde positions d'accès de robot (66'',68'').

8. Système d'archivage de bandes à fonctionnement complètement automatique, comportant un magasin (12''), agencé comme un magasin réversible et pourvu de casiers de réception de cassettes de bandes, tous les casiers à cassettes (62'') pouvant être amenés aussi bien dans une première position d'accès de robot (66'') que dans une seconde position d'accès de robot (68''), ainsi qu'un premier robot (26'') et un second robot (28'') pour transporter cassettes de bandes entre le magasin (12'') et au moins une unité à bandes (32'',34'') associée exclusivement à chaque robot (26'',28''), les premières positions (68'') d'accès de robot étant associées au premier robot (26'') et les secondes positions (68'') d'accès de robot étant associées au second robot (28'') et en outre, pour permettre un fonctionnement simultané des robots (26'',28''), chaque robot (26'',28'') comportant une zone d'action (36'',38'') qui ne coupe pas celle de l'autre robot (28'',26''), caractérisé en ce que le magasin réversible comprend au moins deux tours à rayonnages (16''), situées l'une à côté de l'autre, déplaçables indépendamment l'une de l'autre, et dans lesquelles ont accès aussi bien le premier robot (26'') que le second robot (28''), en ce que les tours à rayonnages (16'') sont constituées d'éléments de rayonnages (60'') qui comprennent un grand nombre de casiers à cassettes (62'') disposés dans des rangées situées les unes au-dessus des autres et en ce que chaque élément de rayonnage (60'') peut être amené dans son ensemble dans la première ou la seconde positions (66'',68'') d'accès de robot.

9. Système d'archivage de bandes selon la revendication 7 ou 8, caractérisé en ce que le magasin (12'') est agencé de telle sorte que les casiers à cassettes (62'') occupent toujours une position définie dans la première (66'') et la seconde (68'') positions d'accès de robot.

10. Système d'archivage de bandes selon l'une des revendications 7 à 9, caractérisé en ce que les éléments de rayonnages (60'') comportent des côtés frontaux (64'') qui, dans la première et la seconde positions (66'',68'') d'accès de robots, font un angle aigu avec une médiatrice (82'') d'une droite de liaison (80'') entre les deux axes de rotation (18'') des tours à rayonnages (16'').

11. Système d'archivage de bandes selon la revendication 10, caractérisé en ce que l'angle aigu a un ordre de grandeur d'environ 45°.

12. Système d'archivage de bandes selon la revendication 10 ou 11, caractérisé en ce que les premières positions (66'') d'accès de robot et les secondes positions (68'') d'accès de robot sont disposées symétriquement par rapport à la médiatrice (82'').

13. Système d'archivage de bandes selon l'une des revendications 7 à 12, caractérisé en ce que le premier bras (46'') et le second bras (50'') sont dimensionnés de telle sorte que chaque robot (26'',28'') puisse effectuer une prise avec la pince (58'') dans tous les casiers à cassettes (62'') d'un élément de rayonnage (60'') situé dans sa position d'accès de robot (66'',68'').

14. Système d'archivage de bandes selon l'une des revendications précédentes, caractérisé en ce que les unités à bandes (32'',34'') sont disposées sur des côtés mutuellement opposés du magasin (12'') et comportent chacune un intervalle d'espacement par rapport au magasin (12'') et en ce que ces intervalles d'espacement est disposé un robot respectif (26'',28'').

15. Système d'archivage de bandes selon l'une des revendications précédentes, caractérisé en ce qu'il est prévu une commande qui fournit à un des deux robots (26'',28'') l'ordre de prendre une cassette de bande dans un ensemble réversible déterminé (16'') et de le placer dans une des unités à bandes (32'',34''), et qui fournit simultanément à cet ensemble réversible (16'') l'ordre de se tourner en direction du robot sollicité (26'',28'') de telle sorte que la cassette de bande correspondante soit située dans la position d'accès de robot (66'',68'').

16. Système d'archivage de bandes selon l'une des revendications précédentes, caractérisé en ce que chaque robot (26'',28'') comprend une pince (58'') dans laquelle est installé un système de lecture pour reconnaître la cassette de bande correspondante.

17. Système d'archivage de bandes selon la revendication 16, caractérisé en ce que le système de lecture est un système de lecture de codes-barres.
